# EUROPEAN PATENT APPLICATION

(11) **EP 3 604 103 A1**
(43) Date of publication of application: **05.02.2020**
(21) Application number: 17902246.2
(22) Date of filing: 22.03.2017
(51) Int. Cl.: B62K 21/08, F16F 9/19, F16F 9/32

(54) **STEERING DAMPER**

(71) Applicant: Honda Motor Co., Ltd., Tokyo 107-8556 (JP)
(72) Inventor: GOGO, Kazuhiko, Wako-shi Saitama 351-0193 (JP); ITABASHI, Takeyasu, Wako-shi Saitama 351-0193 (JP)
(74) Representative: Weickmann & Weickmann PartmbB
(86) International application number: PCT/JP2017/011533
(87) International publication number: WO 2018/173167

(57) **Abstract**

A steering damper that can minimize a mounting space, while achieving favorable damping force characteristics, is provided.

A rod member (63) is mounted on a side of a first end of a piston (70) and passes through a side of a first end of the damper case (51). A cylinder (S) has a stepped configuration including a small-diameter cylinder (65) and a large-diameter cylinder (66). Insertion of the piston (70) in the cylinder (S) causes an oil chamber filled with the damper oil to be divided into a first oil chamber (A) that has the small-diameter cylinder (65) as an outer circumference, a second oil chamber (B) that has the large-diameter cylinder (66) as an outer circumference and that contacts the rod member (63), and a third oil chamber (C) that has the large-diameter cylinder (66) as an outer circumference and that does not contact the rod member (63). The piston (70) has a stepped configuration including a small-diameter portion (75) that is associated with the small-diameter cylinder (65) and a large-diameter potion (76) that is associated with the large-diameter cylinder (66).

## Description

### Technical Field

The present invention relates to steering dampers and, more particularly, to a steering damper that can achieve both reduction in a mounting space and favorable damping force characteristics.

### Background Art

A steering damper has hitherto been known as a damping force generating apparatus, disposed between a vehicle body frame and a steering device swingably mounted on the vehicle body frame, for imparting a damping force to a swing motion of the steering device.

Patent Document 1 discloses a steering damper that includes a piston that makes a reciprocating motion inside a cylinder formed in a damper case (damper body) and a bypass passage that provides communication between two oil chambers defined by the piston. A rod member that passes through the damper body to thereby protrude to the outside is connected with both sides of the piston. When the piston makes a reciprocating motion as the steering device makes a swing motion, damper oil passes through orifices disposed in the piston and the bypass passage to thereby generate a damping force.

### Citation List

### Patent Literature

Patent Document 1: JP 05-201377 A

### Summary of Invention

### Technical Problem

The steering damper disclosed in Patent Document 1, however, has a configuration in which the rod member protrudes from both ends of the damper case. Because of this configuration, the rod member tends to become longer in length. In addition, a need exists for considering a length of the rod member protruding and a range over which the damper case swings, which vary according to the swing motion of the steering device. Thus, unfortunately, the steering damper, when mounted on the vehicle body, tends to require a greater mounting space.

An object of the present invention is to solve the foregoing problem of the known art and to provide a steering damper that requires a smaller mounting space, while achieving favorable damping force characteristics.

### Solution to Problems

To achieve the afore-mentioned object, the present invention has a first feature in that steering damper (50) comprises a damper case (51), in which a cylinder (S) filled with damper oil is formed; a piston (70) that makes a reciprocating motion in the cylinder; and a rod member (63) disposed on the piston (70) and passing through the damper case (51), wherein the rod member (63) is disposed on a side of a first end of the piston (70) and passes through a side of a first end of the damper case (51), the cylinder (S) has a stepped configuration including a small-diameter cylinder (65) and a large-diameter cylinder (66), and insertion of the piston (70) in the cylinder (S) causes an oil chamber filled with the damper oil to be divided into a first oil chamber (A) that has the small-diameter cylinder (65) as an outer circumference, a second oil chamber (B) that has the large-diameter cylinder (66) as an outer circumference and that contacts the rod member (63), and a third oil chamber (C) that has the large-diameter cylinder (66) as an outer circumference and that does not contact the rod member (63).

To achieve the afore-mentioned object, the present invention has a second feature in that the piston (70) has a stepped configuration including a small-diameter portion (75) that is associated with the small-diameter cylinder (65) and a large-diameter potion (76) that is associated with the large-diameter cylinder (66).

To achieve the afore-mentioned object, the present invention has a third feature in that the small-diameter portion (75) of the piston (70) has a cross-sectional area equal to a cross-sectional area of the large-diameter potion (76) of the piston (70).

To achieve the afore-mentioned object, the present invention has a fourth feature in that the steering damper further comprises a sub-chamber (57) connected with the third oil chamber (C), the sub-chamber (57) allowing an oil amount in the third oil chamber (C) to increase or decrease.

To achieve the afore-mentioned object, the present invention has a fifth feature in that the steering damper further comprises an air chamber (60) disposed adjacent to the sub-chamber (57) and divided by a bladder (58) from the sub-chamber (57).

To achieve the afore-mentioned object, the present invention has a sixth feature in that the steering damper further comprises a communication oil passage (55) that provides communication between the first oil chamber (A) and the second oil chamber (B).

To achieve the afore-mentioned object, the present invention has a seventh feature in that the steering damper further comprises a flow passage resistance adjustment mechanism disposed in the communication oil passage (55).

To achieve the afore-mentioned object, the present invention has an eighth feature in that the steering damper further comprises laminated valves (73, 74) disposed on respective ends of the piston (70).

To achieve the afore-mentioned object, the present invention has a ninth feature in that the piston (70) has through oil passages (71, 72) that are oriented toward a direction in which the piston (70) operates.

To achieve the afore-mentioned object, the present invention has a tenth feature in that the steering damper (50) is disposed in a vehicle (1) that includes a front fork (10) that constitutes a steering device for a front wheel (WF), and when a steering angle of the front wheel (WF) is zero, the damper case (51) is disposed posterior in the vehicle body to the front fork (10).

### Effects of Invention

According to the first feature of the present invention, steering damper (50) comprises a damper case (51), in which a cylinder (S) filled with damper oil is formed; a piston (70) that makes a reciprocating motion in the cylinder; and a rod member (63) disposed on the piston (70) and passing through the damper case (51), wherein the rod member (63) is disposed on a side of a first end of the piston (70) and passes through a side of a first end of the damper case (51), the cylinder (S) has a stepped configuration including a small-diameter cylinder (65) and a large-diameter cylinder (66), and insertion of the piston (70) in the cylinder (S) causes an oil chamber filled with the damper oil to be divided into a first oil chamber (A) that has the small-diameter cylinder (65) as an outer circumference, a second oil chamber (B) that has the large-diameter cylinder (66) as an outer circumference and that contacts the rod member (63), and a third oil chamber (C) that has the large-diameter cylinder (66) as an outer circumference and that does not contact the rod member (63). Therefore, the application of the stepped cylinder enables the overall length of the steering damper to be shortened thanks to the structure of the rod member protruding from only one side of the damper case. Additionally, the oil chamber filled with the damper oil being divided into three chambers allows an amount of damper oil flowing through the first oil chamber to be readily made equal to the amount of damper oil flowing through the second oil chamber, so that favorable damping force characteristics can be readily achieved.

According to the second feature of the present invention, the piston (70) has a stepped configuration including a small-diameter portion (75) that is associated with the small-diameter cylinder (65) and a large-diameter potion (76) that is associated with the large-diameter cylinder (66). Therefore, the insertion of the stepped piston in the stepped cylinder allows the first oil chamber, the second oil chamber, and the third oil chamber to be divided from each other.

According to the third feature of the present invention, the small-diameter portion (75) of the piston (70) has a cross-sectional area equal to a cross-sectional area of the large-diameter potion (76) of the piston (70). Therefore, a difference in the cross-sectional area between the small-diameter portion and the large-diameter potion is thus canceled by the cross-sectional area of the rod member that passes through the second oil chamber. The second oil chamber thus can have a volume equal to a volume of the first oil chamber. Thus, it is possible to make equal the amount of damper oil flowing between the first oil chamber and the second oil chamber when the piston slides.

According to the fourth feature of the present invention, the steering damper (50) further comprises a sub-chamber (57) connected with the third oil chamber (C), the sub-chamber (57) allowing an oil amount in the third oil chamber (C) to increase or decrease. Therefore, the flow of the damper oil in and out of the third oil chamber that is sandwiched between the first oil chamber and the second oil chamber is absorbed by the sub-chamber, which enables smooth movement of the piston.

According to the fifth feature of the present invention, the steering damper (50) further comprises an air chamber (60) disposed adjacent to the sub-chamber (57) and divided by a bladder (58) from the sub-chamber (57). Therefore, this enables the air chamber to absorb the flow of the damper oil in and out of the sub-chamber. Thus, the reciprocating motion of the piston does not cause pressure to be applied to the third oil chamber and smooth movement of the piston can be achieved. In addition, the provision of the elastic member that pressurizes the air chamber or urges the bladder enables smooth return of the damper oil from the sub-chamber to the third oil chamber.

According to the sixth feature of the present invention, the steering damper further comprises a communication oil passage (55) that provides communication between the first oil chamber (A) and the second oil chamber (B). Therefore, this enables the second oil chamber to receive the damper oil that is delivered from the first oil chamber when the piston moves to the side of the first oil chamber and enables the first oil chamber to receive the damper oil that is delivered from the second oil chamber when the piston moves to the side of the second oil chamber. Specifically, a condition is enabled, in which the first oil chamber and the second oil chamber are filled with the damper oil through recirculation of the damper oil between the first oil chamber and the second oil chamber.

According to the seventh feature of the present invention, the steering damper further comprises a flow passage resistance adjustment mechanism disposed in the communication oil passage (55). Therefore, a damping force for the reciprocating motion of the piston can be generated in the communication oil passage that provides communication between the first oil chamber and the second oil chamber.

According to the eighth feature of the present invention, the steering damper further comprises laminated valves (73, 74) disposed on respective ends of the piston (70). Therefore, the laminated valve on a first side can generate a damping force on the extension side when the rod member is extended and the laminated valve on a second side can generate a damping force on the compression side when the rod member is inserted.

According to the ninth feature of the present invention, the piston (70) has through oil passages (71, 72) that are oriented toward a direction in which the piston (70) operates. Therefore, the through oil passages provide orifices through which the damper oil passes as the piston makes the reciprocating motion. The laminated valves disposed adjacent to ends of the through oil passages can set any damping force.

According to the tenth feature of the present invention, the steering damper (50) is disposed in a vehicle (1) that includes a front fork (10) that constitutes a steering device for a front wheel (WF), and when a steering angle of the front wheel (WF) is zero, the damper case (51) is disposed posterior in the vehicle body to the front fork (10). Therefore, the steering damper can be disposed so as not to protrude to the outside in the vehicle width direction through effective use of a space posterior to the front fork, so that a space occupied by the steering damper during a time including steering can be reduced and a likelihood that the steering damper will be grounded during toppling can be reduced.

### Brief Description of Drawings

[Fig. 1] FIG. 1 is a left side elevation view of a motorcycle, to which a steering damper in accordance with an embodiment of the present invention is applied.
[Fig. 2] FIG. 2 is a partially enlarged perspective view of parts around the steering handlebar in the motorcycle.
[Fig. 3] FIG. 3 is a schematic view of a mounting position of the steering damper.
[Fig. 4] FIG. 4 is a cross-sectional view of the steering damper.
[Fig. 5A] FIG. 5A is a perspective view of a piston.
[Fig. 5B] FIG. 5B is a perspective view of the piston.
[Fig. 6] FIG6 is a front view of the piston.
[Fig. 7] FIG. 7 is explanation drawing illustrating a flow of the damper oil when the steering damper operates toward the extension side.
[Fig. 8] FIG. 8 is explanation drawing illustrating a flow of the damper oil when the steering damper operates toward the compression side.
[Fig. 9] FIG. 9 is a schematic diagram illustrating a modification of a mounting structure for the steering damper.
[Fig. 10] FIG. 10 is a schematic diagram illustrating a second modification of the mounting structure for the steering damper.
[Fig. 11] FIG 11 is a schematic diagram illustrating a third modification of the mounting structure for the steering damper.
[Fig. 12] FIG. 12 is a schematic diagram illustrating a fourth modification of the mounting structure for the steering damper.

### Description of Embodiments

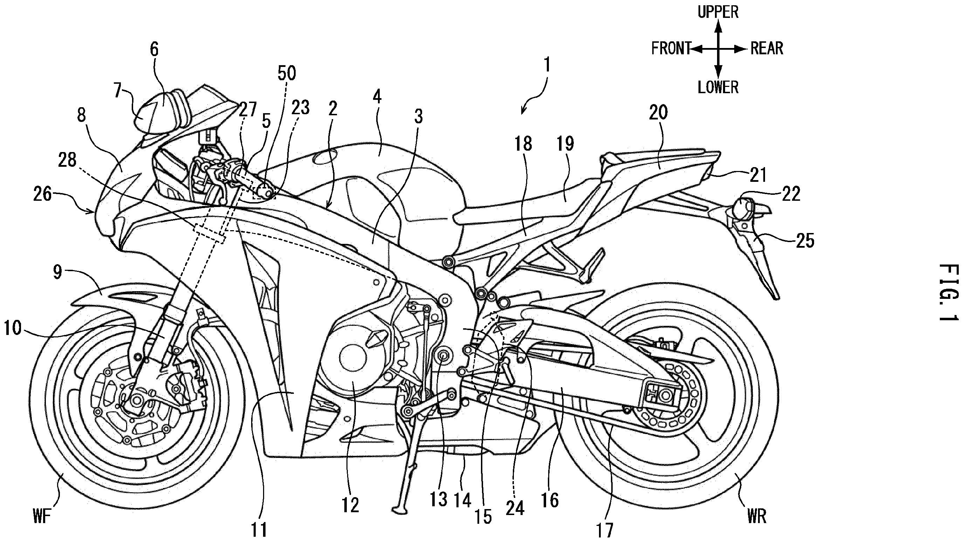

A preferred embodiment of the present invention will be described in detail below with reference to the accompanying drawings. FIG. 1 is a left side elevation view of a motorcycle 1, to which a steering damper 50 in accordance with an embodiment of the present invention is applied. A head pipe 23, which swingably journals a steering stem not depicted, is fixed to a front end portion of a main frame 3, which constitutes a vehicle body frame 2. A pair of left and right front forks 10, which rotatably journals a front wheel WF, is supported by a top bridge 27 and a bottom bridge 28, which are fixed to the steering stem.

A pivot frame 15, which is provided with a pivot 13, is connected with a rear lower portion of the main frame 3. A swing arm 16, which rotatably journals a rear wheel WR, has a front end portion journaled swingably by the pivot 13. The swing arm 16 is suspended by a rear cushion 24 on the vehicle body frame 2. A drive force of an engine 12 is transmitted to the rear wheel WR via a drive chain 17.

A front cowl 8, in which a headlight 26 is embedded, is disposed anterior to a steering handlebar 5, which is fixed to a pair of left and right front forks 10. A rearview mirror 6, in which a front-side direction indicator 7 is embedded, is mounted superior to the headlight 26. A pair of left and right side cowls 11 is connected with lower portions of the front cowl 8. A fuel tank 4 is disposed at an upper portion of the main frame 3.

A rear frame 18, which extends upwardly toward the rear of the vehicle body, is mounted between the main frame 3 and the pivot frame 15. A seat 19 and a seat cowl 20 are mounted on the rear frame 18. A tail light unit 21, a rear-side direction indicator 22, and a rear fender 25 are mounted on the seat cowl 20. The steering damper 50 in the embodiment is disposed between the top bridge 27 and the main frame 3 at a position inside the steering handlebar 5 in a vehicle width direction.

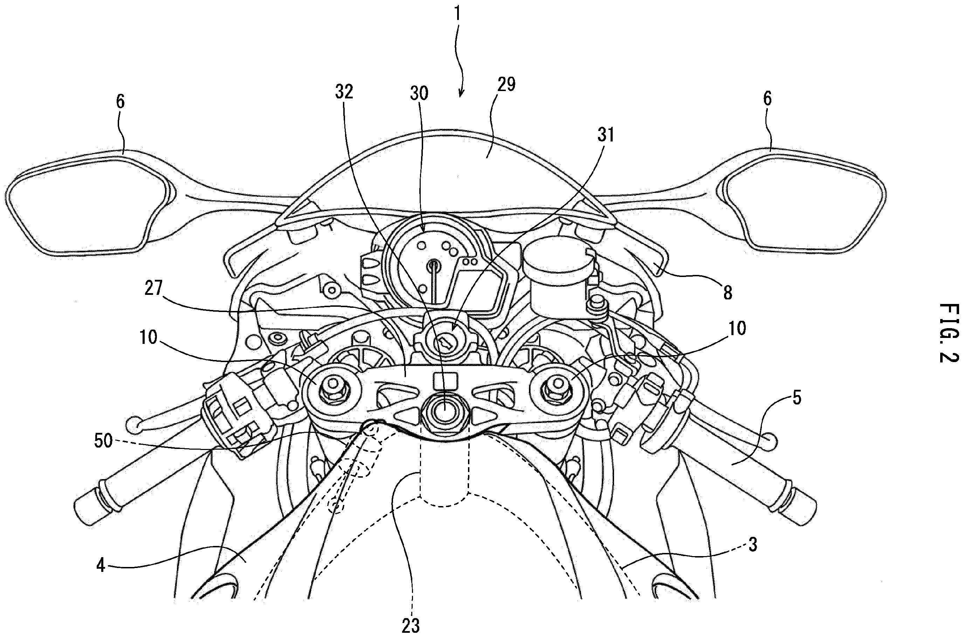

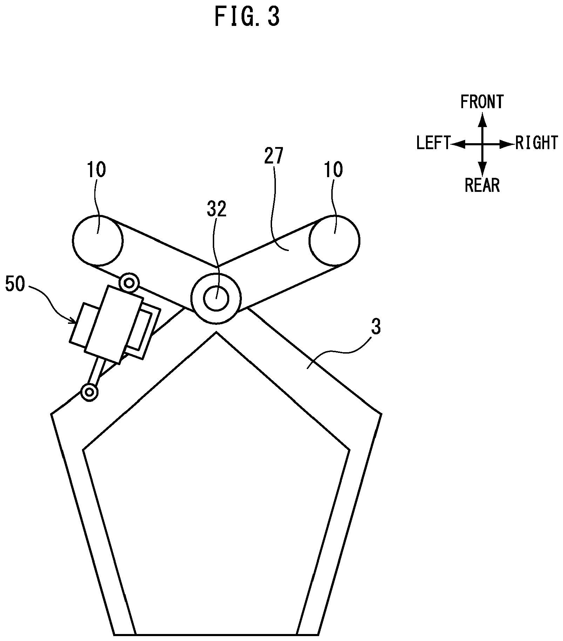

FIG. 2 is a partially enlarged perspective view of parts around the steering handlebar 5 in the motorcycle 1. FIG. 3 is a schematic view of a mounting position of the steering damper 50. A meter unit 30, which includes a speedometer and a tachometer, is disposed posterior to the front cowl 8, in which a screen 29 is mounted. A key cylinder 31, which serves as an ignition switch, is mounted at a front end portion of the top bridge 27. The top bridge 27, which supports upper ends of the front forks 10, is fixed to a steering stem 32, which is swingably journaled by the head pipe 23.

The steering damper 50 in the embodiment is disposed between the top bridge 27 and the main frame 3 at a position inside the steering handlebar 5 in the vehicle width direction. Specifically, the steering damper 50 has a first end portion in a longitudinal direction mounted at a posterior position in the top bridge 27 and has a second end portion in the longitudinal direction mounted on a top surface of an outer position in the main frame 3. In this way, the steering damper 50 is disposed posterior to the front fork 10 in the vehicle body. The foregoing arrangement is enabled by a damper body having a short overall length and by a rod member protruding from only one side of the damper body.

Thus, the steering damper 50 can be disposed so as not to protrude to the outside in the vehicle width direction of the main frame 3 through effective use of a space posterior to the front forks 10, so that a space occupied by the steering damper during a time including steering can be reduced and a likelihood that the steering damper will be grounded during toppling can be reduced. Additionally, as depicted in FIG. 2, an area superior to the steering damper 50 can be easily covered in the fuel tank 4 and other covers, so that effect affecting appearance of the motorcycle 1 can be reduced. It is noted that, by moving the mounting position toward the inside in the vehicle width direction, the steering damper 50 can be disposed inside an outer end portion in the vehicle width direction of the front fork 10.

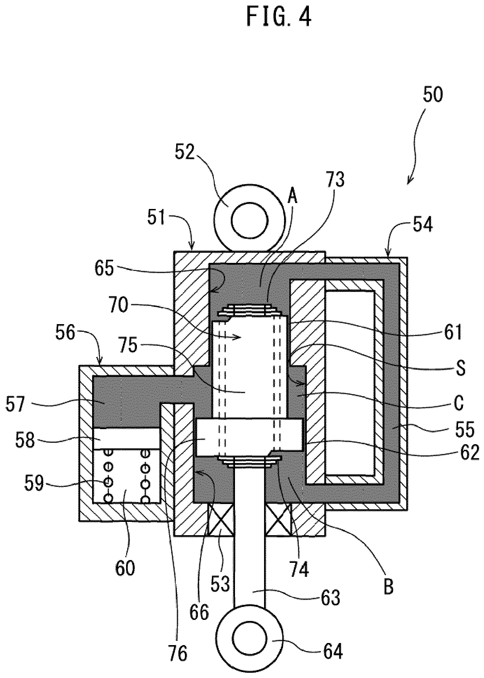

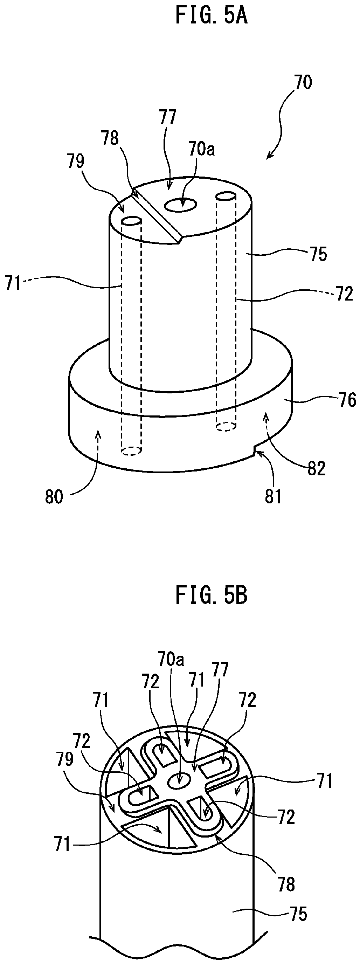

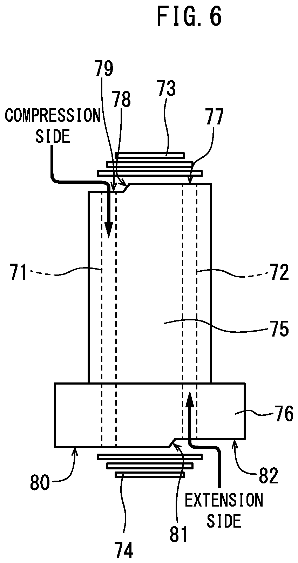

FIG. 4 is a cross-sectional view of the steering damper 50. FIGS. 5A and 5B are each a perspective view of a piston 70. FIG. 6 is a front elevation view of the piston 70. The steering damper 50 in the embodiment is characterized, compared with the known configuration including the rod member passing through the damper case, in that a longitudinal dimension is considerably reduced, while favorable damping force characteristics is achieved.

The steering damper 50 includes a damper case 51 and the piston 70. The damper case 51 has a cylinder S defined thereinside. The piston 70 is connected with a rod member 63, which passes through one side of the damper case 51. A case-side mounting portion 52, which is disposed at an end portion of the damper case 51, and a rod-side mounting portion 64, which is disposed at an end portion of the rod member 63, are supported by the top bridge 27 and the main frame 3, respectively, via a ball joint, for example.

The cylinder S, which is formed in the damper case 51 and has a cylindrical shape, has a stepped configuration including a small-diameter cylinder 65 and a large-diameter cylinder 66. The small-diameter cylinder 65 is formed on the side of the case-side mounting portion 52. The large-diameter cylinder 66 is formed on the side of an oil seal 53. The piston 70, which is connected with the rod member 63 and makes a reciprocating motion inside the cylinder S, has a stepped configuration including a small-diameter portion 75 and a large-diameter potion 76. The small-diameter portion 75 is associated with the small-diameter cylinder 65. The large-diameter potion 76 is associated with the large-diameter cylinder 66. The piston 70, having the stepped configuration, is inserted in the cylinder S, having the stepped configuration. The insertion causes an oil chamber filled with damper oil to be divided into a first oil chamber A, a second oil chamber B, and a third oil chamber C. The first oil chamber A has the small-diameter cylinder 65 as an outer circumference. The second oil chamber B has the large-diameter cylinder 66 as an outer circumference and contacts the rod member 63. The third oil chamber C has the large-diameter cylinder 66 as an outer circumference, and does not contact the rod member 63.

A pipe-shaped second body 54 is mounted on the outside of the damper case 51. The second body 54 constitutes a communication oil passage 55, which provides communication between the first oil chamber A and the second oil chamber B. The provision of the communication oil passage 55 enables the damper oil delivered from the first oil chamber A when the piston 70 moves to the first oil chamber A side to be received by the second oil chamber B and the damper oil delivered from the second oil chamber B when the piston 70 moves to the second oil chamber B side to be received by the first oil chamber A. Specifically, a condition is enabled, in which the first oil chamber A and the second oil chamber B are filled with the damper oil through recirculation of the damper oil between the first oil chamber A and the second oil chamber B.

The embodiment is configured such that a cross-sectional area of the small-diameter portion 75 of the piston 70 is equal to an area obtained by subtracting a cross-sectional area of the rod member 63 from a cross-sectional area of the large-diameter portion of the piston 70. The foregoing arrangement results in a pressure-receiving area of the first oil chamber A being equal to a pressure-receiving area of the third oil chamber C, to thereby achieve smooth movement of the oil damper through the communication oil passage 55, so that a damping force on an extension side and a damping force on a compression side can be uniformly generated to correspond with clockwise and counterclockwise steering operations of a steering device.

A third body 56, which constitutes a sub-chamber 57, is mounted on the outside of the damper body 51. The sub-chamber 57 communicates with the third oil chamber C, which is located between the first oil chamber A and the second oil chamber B. The sub-chamber 57 functions as a reservoir tank for the damper oil that flows in and out of the third oil chamber C through a reciprocating motion of the piston 70. An air chamber 60, which is filled with, for example, nitrogen gas, is disposed in the third body 56. A bladder 58, which is urged by a spring 59, divides the sub-chamber 57 and the air chamber 60. The bladder 58, formed of rubber, for example, pressurizes the sub-chamber 57 with a slight force that represents an urging force of the spring 59 and pressure applied to the air chamber 60. The damper oil in the sub-chamber 57 can thereby return smoothly to the third oil chamber C. Greater pressurization amounts of the air chamber 60 tend to enhance effect of reducing bubbles in the damper oil and smaller pressurization amounts tend to make the movement of the piston 70 smooth. The pressurization amount is configured to be adjustable even after the assembly of the steering damper 50.

Reference is made to FIGS. 5A and 6. The piston 70 has through oil passages 71 and 72, which function as orifices. The piston 70 further has a through hole 70a at an axial center thereof. The rod member 63 is passed through the through hole 70a. A laminated valve 73, which adjusts the damping force on the extension side, is disposed at an end portion of the small-diameter portion 75 of the piston 70. A laminated valve 74, which adjusts the damping force on the compression side, is disposed at an end portion of the large-diameter potion 76 of the piston 70. The laminated valves 73 and 74 are each composed of annular, thin metal sheets. The number of metal sheets stacked one on top of another determines a basic damping force. It is noted that FIGS. 5A and 6 each illustrate the piston 70 only schematically for describing operation of the steering damper 50. More specifically, the piston 70 is configured, as depicted in FIG. 5B, to have four to six (four each in FIG. 5B) each of the through oil passage 71, through which the damper oil passes for actuation on the compression side flows, and through oil passage 72, through which the damper oil passes for actuation on the extension side flows.

The piston 70 has a step on each of both end faces in order to enable the laminated valves 73 and 74 to function smoothly. Specifically, the end face of the small-diameter portion 75 has a higher floor surface 77 and a lower floor surface 79. The higher floor surface 77 contacts the laminated valve 73 on the extension side. The lower floor surface 79 is formed via a step 78 from the higher floor surface 77. The end face of the large-diameter potion 76 has a higher floor surface 80 and a lower floor surface 82. The higher floor surface 80 contacts the laminated valve 74 on the compression side. The lower floor surface 82 is formed via a step 81 from the higher floor surface 80. The foregoing configurations result in the following. Specifically, when the rod member 63 is pushed in the damper body 51, the damper oil that flows in the through oil passage 71 via a gap between the laminated valve 73 on the extension side and the lower floor surface 79 resists an elastic force of the laminated valve 74 on the compression side and flows out, to thereby generate a damping force. When the rod member 63 is extended from the damper body 51, the damper oil that flows in the through oil passage 72 via a gap between the laminated valve 74 on the compression side and the lower floor surface 82 resists an elastic force of the laminated valve 73 on the extension side and flows out, to thereby generate a damping force.

As depicted in FIG. 4, a small-diameter-side miniature oil passage 61, as an annular slight gap, is provided between the small-diameter portion 75 of the piston and an inner peripheral surface of the small-diameter cylinder 65. Similarly, a large-diameter-side miniature oil passage 62 is provided between the large-diameter potion 76 of the piston and an inner peripheral surface of the large-diameter cylinder 66. These miniature oil passages 61 and 62 provide communication between the first oil chamber A and the third oil chamber C, and between the second oil chamber B and the third oil chamber C, respectively, to thereby enable the third oil chamber C to absorb expansion and shrinkage of the damper oil, occurring as a result of changes in temperature.

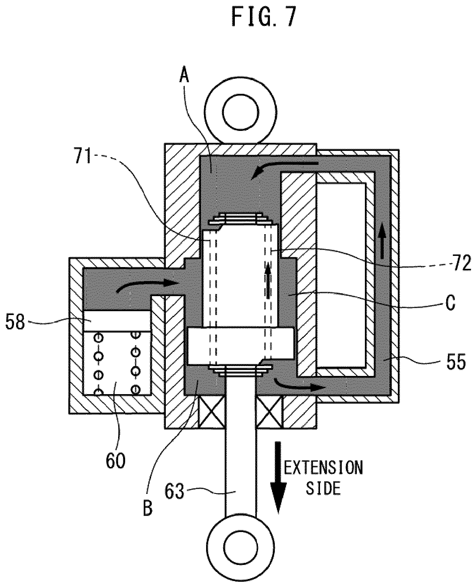

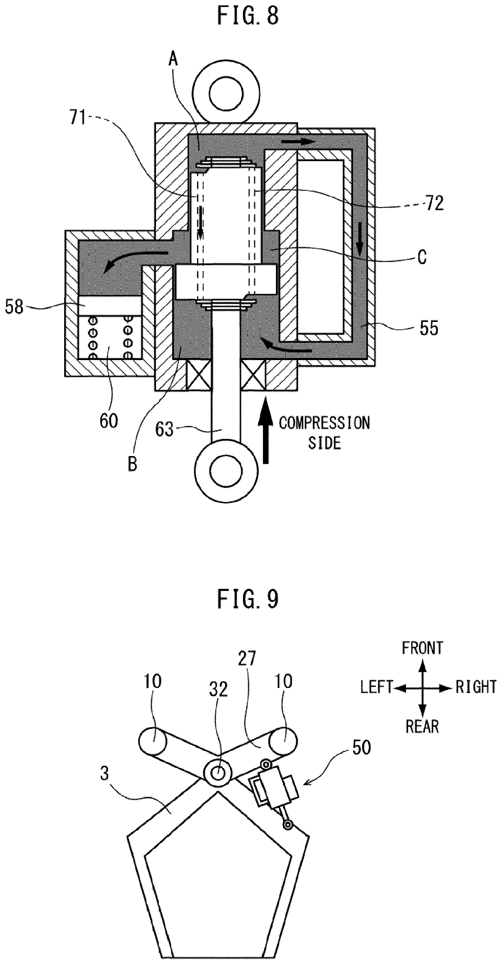

FIG. 7 illustrates a flow of the damper oil when the steering damper 50 operates toward the extension side. FIG. 8 illustrates a flow of the damper oil when the steering damper 50 operates toward the compression side. As depicted in FIG. 7, when the rod member 63 extends from the damper body 51, the damper oil that fills the second oil chamber B escapes through the through oil passage 72 of the piston 70 to the first oil chamber A, while moving through the communication oil passage 55 to the first oil chamber A. At this time, the damper oil flows from the sub-chamber 57 to the third oil chamber C, in which displacement increases.

As depicted in FIG. 8, when the rod member 63 is pushed into the damper body 51, the damper oil that fills the first oil chamber A escapes through the through oil passage 71 of the piston 70 to the second oil chamber B, while moving through the communication oil passage 55 to the second oil chamber B. At this time, the damper oil in the third oil chamber C, in which displacement decreases, flows in the sub-chamber 57. It is noted that the bladder 58 keeps minimum the pressure to be applied to the sub-chamber 57, so that the damping force of the steering damper 50 will not be affected.

Additionally, the communication oil passage 55 may be provided with a damping force adjustment mechanism that varies an orifice passage area of the communication oil passage 55 in a plurality of steps or stepless. The damping force adjustment mechanism can achieve a damping force according to user's needs on the basis of the basic damping force set with the laminated valves 73 and 74 to correspond with a specific model of the steering damper. Ease of use and marketability can thus be enhanced. It is noted that the damping force adjustment mechanism may be a manual type using, for example, dials for setting or an electronic control type that automatically controls setting according to a running condition as detected by various sensors.

As described above, the steering damper 50 in the embodiment is characterized in that the rod member 63 is connected with only one side of the piston 70 to thereby shorten the entire length of the steering damper and that the piston and the cylinder each have a stepped configuration to thereby achieve a sufficient damper oil capacity. The foregoing arrangements enable size of the steering damper to be reduced while achieving a sufficient damping force and enable a degree of freedom in the location in the vehicle body at which the steering damper is mounted to be enhanced. Additionally, greater damper oil capacity increases thermal capacity and reduces operating loads of the damper oil, so that deterioration of the damper oil can be retarded.

FIG. 9 is a schematic diagram illustrating a modification of a mounting structure for the steering damper 50. While the steering damper 50, being mounted on the left-hand side in the vehicle width direction between the top bridge 27 and the main frame 3 with the damper body 51 disposed at an anterior side in the vehicle body in the example depicted in FIGS. 2 and 3, the steering damper 50 may be mounted on the right-hand side in the vehicle width direction. It is noted that the mounting portion at the anterior side in the vehicle body may be disposed on the bottom bridge 28 or the front forks 10 and the mounting portion at a posterior side in the vehicle body may be disposed at a lower portion of the main frame 3 or a recess formed in the main frame 3.

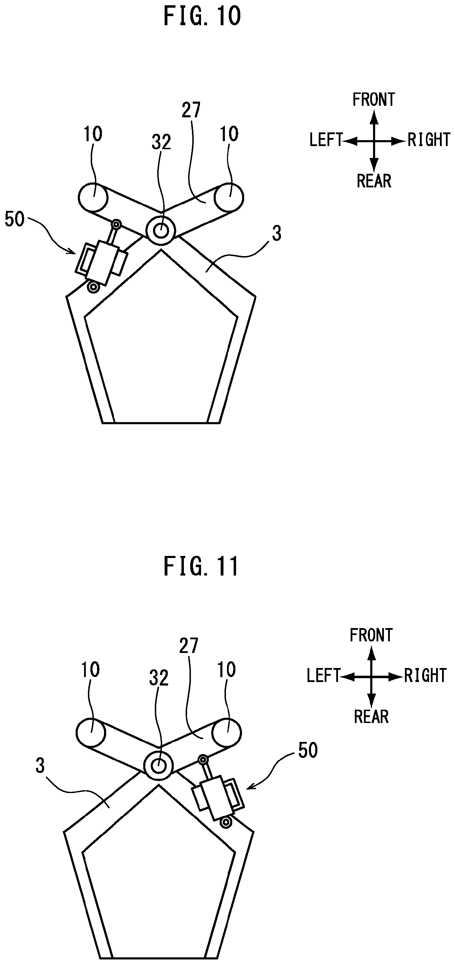

FIGS. 10 and 11 are schematic diagrams illustrating second and third modifications, respectively, of the mounting structure for the steering damper 50. While the damper body 51 is disposed at the anterior side in the vehicle body in the example illustrated in FIGS. 2 and 3, the rod member 63 may be disposed at the anterior side in the vehicle body. Unlike the known configuration including the rod member passing through the damper case, the steering damper 50 in accordance with the present application can be mounted upside down, because the mounting portions are disposed on both ends in the longitudinal direction. The foregoing configuration enables an optimum layout to be achieved depending on a space available around the mounting portion.

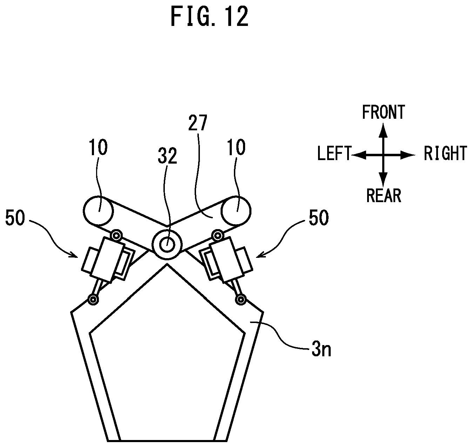

FIG. 12 is a schematic diagram illustrating a fourth modification of the mounting structure for the steering damper 50. The steering damper 50 in the embodiment, while being characterized in that a damping force can be generated uniformly on the extension side and the compression side using a relatively short stroke, may be mounted on both lateral sides in the vehicle width direction by making effective use of compactness of the damper body 51. This enables a steady damping force to be imparted through steering of the steering device.

It is noted that the configuration of the vehicle, the shape of the main frame and the top bridge, the shape and structure of the damper body, the shape and structure of the cylinder and the piston, the shape and structure of the laminated valves, the shape and capacity of each oil chamber, the shape and structure of the communication oil passage, the shape and structure of the sub-chamber and the air chamber, the structure of the bladder, the structure of the damping force adjustment mechanism, and the like described in the above embodiment are illustrative only and not limiting, and various changes may be made therein. For example, the piston having the stepped configuration may be formed as an integral part or an assembly type in which the large-diameter potion and the small-diameter portion are manufactured separately and are later assembled with each other. The steering damper in accordance with the present invention can be applied to, in addition to the motorcycle, various types of vehicles including a steering device that swings clockwise and counterclockwise.

### Description of Reference Symbols

- 1: Motorcycle
- 50: Steering damper
- 51: Damper case
- 55: Communication oil passage
- 57: Sub-chamber
- 58: Bladder
- 60: Air chamber
- 63: Rod member
- S: Cylinder
- 65: Small-diameter cylinder
- 66: Large-diameter cylinder
- 70: Piston
- 71, 72: Through oil passage
- 73, 74: Laminated valve
- 75: Small-diameter portion
- 76: Large-diameter potion
- A: First oil chamber
- B: Second oil chamber
- C: Third oil chamber

## Claims

1. A steering damper (50) comprising:
a damper case (51), in which a cylinder (S) filled with damper oil is formed;
a piston (70) that makes a reciprocating motion in the cylinder; and
a rod member (63) disposed on the piston (70) and passing through the damper case (51), wherein
the rod member (63) is disposed on a side of a first end of the piston (70) and passes through a side of a first end of the damper case (51),
the cylinder (S) has a stepped configuration including a small-diameter cylinder (65) and a large-diameter cylinder (66), and
insertion of the piston (70) in the cylinder (S) causes an oil chamber filled with the damper oil to be divided into a first oil chamber (A) that has the small-diameter cylinder (65) as an outer circumference, a second oil chamber (B) that has the large-diameter cylinder (66) as an outer circumference and that contacts the rod member (63), and a third oil chamber (C) that has the large-diameter cylinder (66) as an outer circumference and that does not contact the rod member (63).

2. The steering damper according to claim 1, wherein
the piston (70) has a stepped configuration including a small-diameter portion (75) that is associated with the small-diameter cylinder (65) and a large-diameter potion (76) that is associated with the large-diameter cylinder (66).

3. The steering damper according to claim 1 or 2, wherein
the small-diameter portion (75) of the piston (70) has a cross-sectional area equal to a cross-sectional area of the large-diameter potion (76) of the piston (70).

4. The steering damper according to any one of claims 1 to 3, further comprising:
a sub-chamber (57) connected with the third oil chamber (C), the sub-chamber (57) allowing an oil amount in the third oil chamber (C) to increase or decrease.

5. The steering damper according to claim 4, further comprising:
an air chamber (60) disposed adjacent to the sub-chamber (57) and divided by a bladder (58) from the sub-chamber (57).

6. The steering damper according to any one of claims 1 to 5, further comprising:
a communication oil passage (55) that provides communication between the first oil chamber (A) and the second oil chamber (B).

7. The steering damper according to claim 6, further comprising:
a flow passage resistance adjustment mechanism disposed in the communication oil passage (55).

8. The steering damper according to any one of claims 1 to 7, further comprising:
laminated valves (73, 74) disposed on respective ends of the piston (70).

9. The steering damper according to claim 8, wherein
the piston (70) has through oil passages (71, 72) that are oriented toward a direction in which the piston (70) operates.

10. The steering damper according to any one of claims 1 to 9, wherein
the steering damper (50) is disposed in a vehicle (1) that includes a front fork (10) that constitutes a steering device for a front wheel (WF), and
when a steering angle of the front wheel (WF) is zero, the damper case (51) is disposed posterior in the vehicle body to the front fork (10).

## Amended claims

### Amended claims under Art. 19.1 PCT

1. (amended) A steering damper (50) comprising:
a damper case (51), in which a cylinder (S) filled with damper oil is formed;
a piston (70) that makes a reciprocating motion in the cylinder; and
a rod member (63) disposed on the piston (70) and passing through the damper case (51), wherein
the rod member (63) is disposed on a side of a first end of the piston (70) and passes through a side of a first end of the damper case (51),
the cylinder (S) has a stepped configuration including a small-diameter cylinder (65) and a large-diameter cylinder (66),
insertion of the piston (70) in the cylinder (S) causes an oil chamber filled with the damper oil to be divided into a first oil chamber (A) that has the small-diameter cylinder (65) as an outer circumference, a second oil chamber (B) that has the large-diameter cylinder (66) as an outer circumference and that contacts the rod member (63), a third oil chamber (C) that has the large-diameter cylinder (66) as an outer circumference and that does not contact the rod member (63), and
the third oil chamber (C) is connected with a sub-chamber (57) allowing an oil amount in the third oil chamber (C) to increase or decrease.

2. The steering damper according to claim 1, wherein
the piston (70) has a stepped configuration including a small-diameter portion (75) that is associated with the small-diameter cylinder (65) and a large-diameter potion (76) that is associated with the large-diameter cylinder (66).

3. The steering damper according to claim 1 or 2, wherein
the small-diameter portion (75) of the piston (70) has a cross-sectional area equal to a area obtained by subtracting a cross-sectional area of the rod member from a cross-sectional area of the large-diameter potion (76) of the piston (70).

4. (cancelled)

5. (amended) The steering damper according to any one of claims 1 to 3, further comprising:
an air chamber (60) disposed adjacent to the sub-chamber (57) and divided by a bladder (58) from the sub-chamber (57).

6. (amended) The steering damper according to any one of claims 1 to 3 and 5, further comprising:
a communication oil passage (55) that provides communication between the first oil chamber (A) and the second oil chamber (B).

7. The steering damper according to claim 6, further comprising:
a flow passage resistance adjustment mechanism disposed in the communication oil passage (55).

8. (amended)
A steering damper (50) comprising:
a damper case (51), in which a cylinder (S) filled with damper oil is formed;
a piston (70) that makes a reciprocating motion in the cylinder; and
a rod member (63) disposed on the piston (70) and passing through the damper case (51), wherein
the rod member (63) is disposed on a side of a first end of the piston (70) and passes through a side of a first end of the damper case (51),
the cylinder (S) has a stepped configuration including a small-diameter cylinder (65) and a large-diameter cylinder (66),
insertion of the piston (70) in the cylinder (S) causes an oil chamber filled with the damper oil to be divided into a first oil chamber (A) that has the small-diameter cylinder (65) as an outer circumference, a second oil chamber (B) that has the large-diameter cylinder (66) as an outer circumference and that contacts the rod member (63), and a third oil chamber (C) that has the large-diameter cylinder (66) as an outer circumference and that does not contact the rod member (63), and
laminated valves (73, 74) disposed on respective ends of the piston (70).

9. The steering damper according to claim 8, wherein
the piston (70) has through oil passages (71, 72) that are oriented toward a direction in which the piston (70) operates.

10. (amended) The steering damper according to any one of claims 1 to 3 and 5 to 9, wherein
the steering damper (50) is disposed in a vehicle (1) that includes a front fork (10) that constitutes a steering device for a front wheel (WF), and
when a steering angle of the front wheel (WF) is zero, the damper case (51) is disposed posterior in the vehicle body to the front fork (10).

Statement under Art. 19.1 PCT
The inventions in claims (previous claims) 4 and 8 at the time of filing were found to have inventive step, so claims were amended as follows.

The previous claim 4 was rewritten to an independent form and the previous claim 4 was cancelled with this rewriting.

The previous claim 8 was rewritten to an independent form.

The description in claim 3 of "the small-diameter portion (75) of the piston (70) has a cross-sectional area equal to a cross-sectional area of the large-diameter potion (76) of the piston (70)" was amended to the description of "the small-diameter portion (75) of the piston (70) has a cross-sectional area equal to an area obtained by subtracting a cross-sectional area of the rod member from a cross-sectional area of the large-diameter potion (76) of the piston (70)".

The description of "any one of claim 1 to 4 "referred in claim 5 was amended to the description of "any one of claim 1 to 3".

The description of "any one of claim 1 to 5 "referred in claim 6 was amended to the description of "any one of claim 1 to 3 and 5".

The description of "any one of claim 1 to 9 "referred in claim 10 was amended to the description of "any one of claim 1 to 3 and 5 to 9".
